# FASCICULE DE BREVET EUROPEEN

(11) **EP 2 817 201 B1**
(45) Date de publication et mention de la délivrance du brevet: **14.09.2016**
(21) Numéro de dépôt: 13703395.7
(22) Date de dépôt: 07.02.2013
(51) Int. Cl.: B62D 25/20

(54) **VÉHICULE AUTOMOBILE COMPRENANT UN PLANCHER ARRIÈRE EN DEUX PARTIES**
AUTO MIT ZWEITEILIGEM HINTEREN BODEN
AUTOMOBILE INCLUDING A TWO-PART REAR FLOOR

(30) Priorité: 22.02.2012 FR 1251607
(43) Date de publication de la demande: 31.12.2014
(73) Titulaire: Renault S.A.S., 92100 Boulogne-Billancourt (FR)
(72) Inventeur: LEFEBVRE, Benjamin, F-91470 Les Molieres (FR); VINIAL, Christophe, F-91220 Le Plessis Pate (FR)
(86) Numéro de dépôt international: PCT/EP2013/052472
(87) Numéro de publication internationale: WO 2013/124165

(56) Documents cités:
- GB-A- 927 275
- US-A1- 2004 140 690
- US-A1- 2011 133 518

## Description

La présente invention concerne le domaine des véhicules automobiles et, notamment les véhicules utilitaires comportant une unique rangée de sièges.

Plus particulièrement, l'invention concerne la structure des planchers du véhicule automobile.

Les véhicules utilitaires comprennent à l'arrière de la première rangée de sièges, délimitant un plancher arrière d'un plancher avant, un espace de chargement dont le plancher arrière présente un motif en relief réalisé généralement lors de l'emboutissage de la tôle formant le plancher arrière. Afin d'obtenir une surface plane et présentant une meilleure résistance aux charges appliquées sur le plancher arrière, un plancher supérieur, appelé « plancher arrêt de charge » est disposé de façon à recouvrir le plancher arrière.

Généralement, le plancher d'un véhicule automobile comprend une partie arrière appelée « plancher arrière » reliée à une partie avant appelée « plancher avant » par un épaulement appelé « pare-close ». Le plancher arrière ainsi défini est délimité par la traverse pare-close et un anneau de remorquage situé à l'extrémité arrière du véhicule automobile.

On se réfèrera à cet égard aux documents EP 0 756 984 et EP 0 951 417 qui décrivent un plancher arrière formé d'une unique tôle reliée au plancher avant au niveau d'une traverse transversale.

Afin de simplifier la conception d'un plancher arrière, il est prévu de réaliser un plancher arrière en deux parties, comprenant une partie avant et une partie arrière reliées entre elles par des moyens de liaison de manière à former une tôle. Le plancher supérieur sera alors destiné à recouvrir la partie avant du plancher arrière, afin de former un espace de chargement substantiellement plan. Chaque partie avant et arrière du plancher comprend des moyens de renfort, tel que par exemple des traverses transversales afin d'augmenter la résistance aux efforts de flexion et de torsion de chacune des parties du plancher arrière.

Généralement, la liaison entre la partie avant et la partie arrière est réalisée par des lignes de soudure ou collage, formant ainsi une « ligne de couture » des parties avant et arrière. Le document GB 927 275 A décrit également un véhicule comprenant un plancher avant et un plancher arrière, ce dernier étant constitué d'une partie avant et d'une partie arrière reliée à la partie avant par des moyens de liaison, ici par soudage, les parties avant et arrière comportant des moyens de renfort s'étendant transversalement par rapport à l'axe longitudinal du véhicule. Le plancher arrière comprend également des moyens de rigidification situés entre les moyens de renfort au niveau de la liaison entre les parties avant et arrière.

Cette liaison entre les parties avant et arrière du plancher arrière n'est pas suffisamment robuste. Afin de rigidifier cette liaison, il est possible d'ajouter une traverse transversale au niveau de la liaison.

Toutefois, une telle solution est coûteuse, difficile à mettre en oeuvre et nécessite l'adaptation de la structure des planchers arrières, et augmente considérablement l'encombrement sous le plancher arrière (ex. : débattement du train roulant arrière.

Un objectif de l'invention est donc de pallier ces inconvénients et de fournir un véhicule automobile comprenant un plancher arrière résistant aux efforts de flexion et de torsion, notamment au niveau de la liaison entre les parties avant et arrière du plancher arrière non située au droit d'un quelconque renforcement transversal, ainsi que de faciliter l'implantation d'un plancher supérieur.

Selon un mode de réalisation, l'invention a pour objet un véhicule automobile comprenant un plancher arrière, un plancher avant relié au plancher arrière, ledit plancher arrière comportant une partie avant, une partie arrière reliée à la partie avant par des moyens de liaison. Les parties avant et arrière comportent des moyens de renfort s'étendant transversalement par rapport à l'axe longitudinal du véhicule automobile.

Le plancher arrière comprend des moyens de rigidification situés entre les moyens de renfort, au niveau de la liaison entre les parties avant et arrière.

Ainsi, la résistance aux efforts de flexion et de torsion de chacune des parties du plancher arrière se trouve augmentée au niveau de la jonction entre ces deux parties. De plus, le volume sous le plancher se trouve augmenté par la suppression de la traverse transversale au niveau de la liaison entre les parties avant et arrière.

Les parties avant et arrière comprennent une pluralité de nervures longitudinales s'étendant suivant la direction longitudinale du véhicule entre les moyens de renfort transversaux.

Lors du roulage du véhicule automobile, les roues et la ligne d'échappement transmettent des vibrations à travers le plancher générant ainsi des nuisances sonores à l'intérieur de l'habitacle du véhicule. Les nervures longitudinales permettent ainsi d'atténuer une partie des vibrations.

Les nervures de la partie avant sont situées dans le prolongement des nervures de la partie arrière.

Selon un mode de réalisation, le véhicule automobile comprend un plancher supérieur destiné à recouvrir la partie avant du plancher arrière, afin de former une surface sensiblement plane avec la partie arrière du plancher arrière.

Avantageusement, le plancher supérieur comprend une pluralité de nervures longitudinales s'étendant suivant la direction longitudinale du véhicule et destinées à coopérer avec les nervures de la partie avant du plancher arrière.

Les nervures du plancher supérieur peuvent être alignées avec les nervures de la partie arrière du plancher arrière et peuvent s'étendre sensiblement sur toute la longueur du plancher supérieur.

Par exemple, les nervures longitudinales sont régulièrement espacées.

Les parties avant et arrière peuvent être réalisées en tôle métallique emboutie et le plancher supérieur peut être réalisé en matière synthétique ou en tôle métallique emboutie.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente schématiquement une partie d'un véhicule automobile selon l'invention,
- la figure 2 est une vue de côté de la figure 1,
- la figure 3 est une vue en perspective du véhicule selon la figure 1 comprenant un plancher supérieur, et
- la figure 4 est une vue de côté de la figure 3.

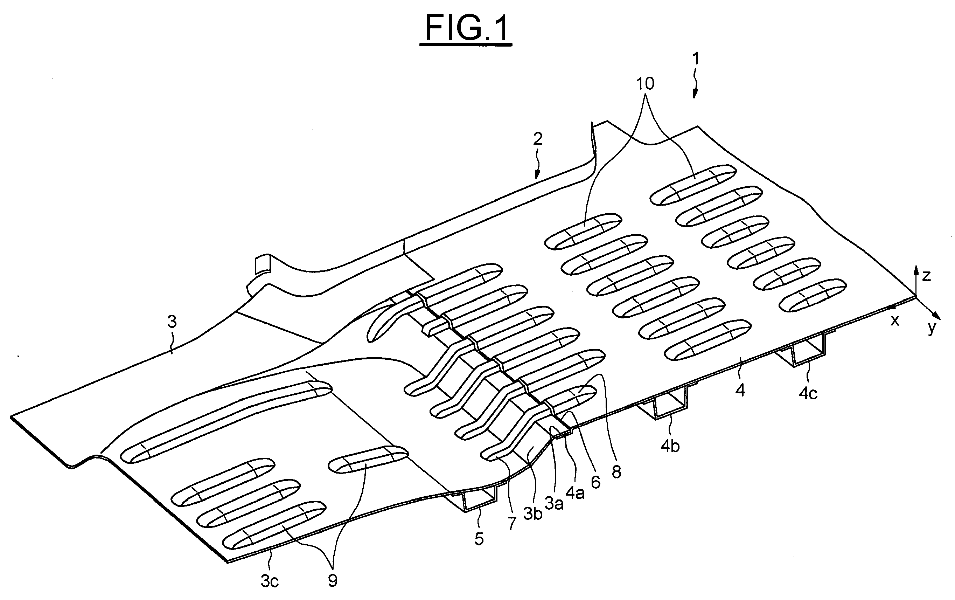

Dans la suite de la description, les termes « longitudinal », « transversal », « vertical », « avant », « arrière », « gauche » et « droite », s'entendent par rapport au repère orthogonal usuel des véhicules automobiles, représenté sur la figure 1, et comprenant :
- un axe longitudinal X, horizontal et dirigé de l'arrière vers l'avant du véhicule ;
- un axe transversal Y, horizontal, perpendiculaire à l'axe X et dirigé de droite à gauche du véhicule se déplaçant vers l'avant ;
- un axe Z, orthogonal aux axes X et Y et vertical dirigé de bas en haut.

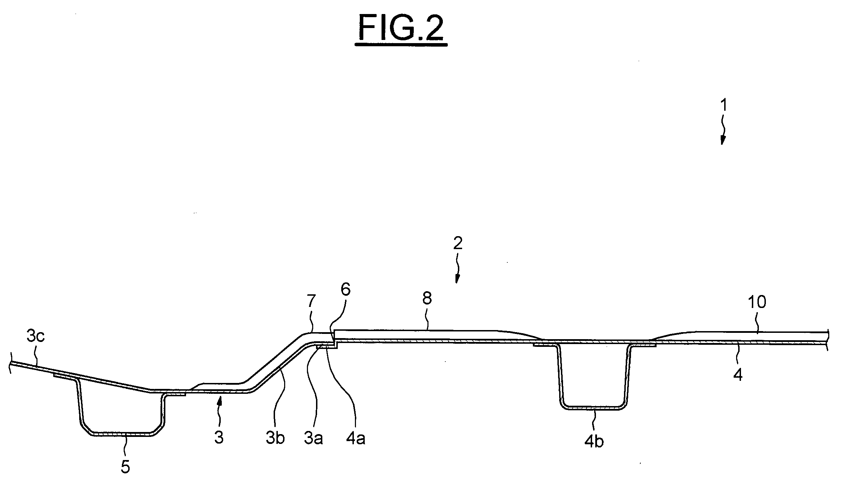

Telle qu'illustrée sur les figures 1 et 2, une partie d'un véhicule automobile, référencée 1 dans son ensemble, comprend un plancher arrière 2 destiné à être relié à un plancher avant (non représenté) du véhicule automobile 1. Le plancher arrière 2 s'étend suivant un axe longitudinal X, sous l'espace de chargement, notamment d'un véhicule utilitaire le cas échéant, et au-dessus de l'axe des roues arrières (non représentées) du véhicule.

Le plancher arrière 2 comprend une partie avant 3 reliée au plancher avant (non représenté) généralement par une traverse transversale (non représentée) et une partie arrière 4 reliée à la partie avant 3.

La partie arrière 4 présente une forme de plaque sensiblement plane s'étendant dans le plan XY, tandis que la partie avant 3 présente une première portion 3a sensiblement plane s'étendant dans le prolongement de la partie arrière 4 et une première portion sensiblement inclinée 3b de manière à former un dénivelé suivant l'axe Z entre la partie avant 3 et la partie arrière 4.

La première portion sensiblement inclinée 3b s'étend par une deuxième portion sensiblement inclinée 3c vers l'avant du véhicule automobile 1. L'extrémité de la deuxième portion inclinée 3c se trouve alignée avec la première portion plane 3a. La première portion plane 3a de la partie avant 3 repose sur une languette 4a située à l'extrémité avant de la partie arrière 4.

La partie arrière 4 comprend des moyens de renfort, tel que des traverses transversales 4b, 4c par exemple en forme de U s'étendant transversalement par rapport à l'axe longitudinal X du véhicule automobile 1 et la partie avant 3 comprend une traverse transversale 5 s'étendant transversalement par rapport à l'axe longitudinal X du véhicule automobile 1.

Les parties avant et arrière 3, 4 sont réalisées en tôle métallique emboutie et sont reliées entre elles par des moyens de soudages formant un cordon de soudure à la jonction entre les deux parties avant et arrière 3, 4. En variante, les parties avant et arrière 3, 4 peuvent être reliées par collage ou tout autre moyen de fixation.

Chacune des parties avant et arrière 3, 4 comprend une pluralité de nervures longitudinales 7, 8 disposées entre la traverse 5 de la partie avant 3 et la traverse 4b de la partie arrière 4 et s'étendant suivant la direction longitudinale X du véhicule automobile 1. Ainsi, la jonction entre les parties avant et arrière 3, 4 se trouve rigidifiée.

Les nervures 8 de la partie arrière 3 sont situées dans le prolongement des nervures 7 de la partie avant 2.

Telles qu'illustrées, les parties avant et arrière 3, 4 comprennent des nervures longitudinales supplémentaires 9, 10 permettant de rigidifier davantage le plancher arrière 2.

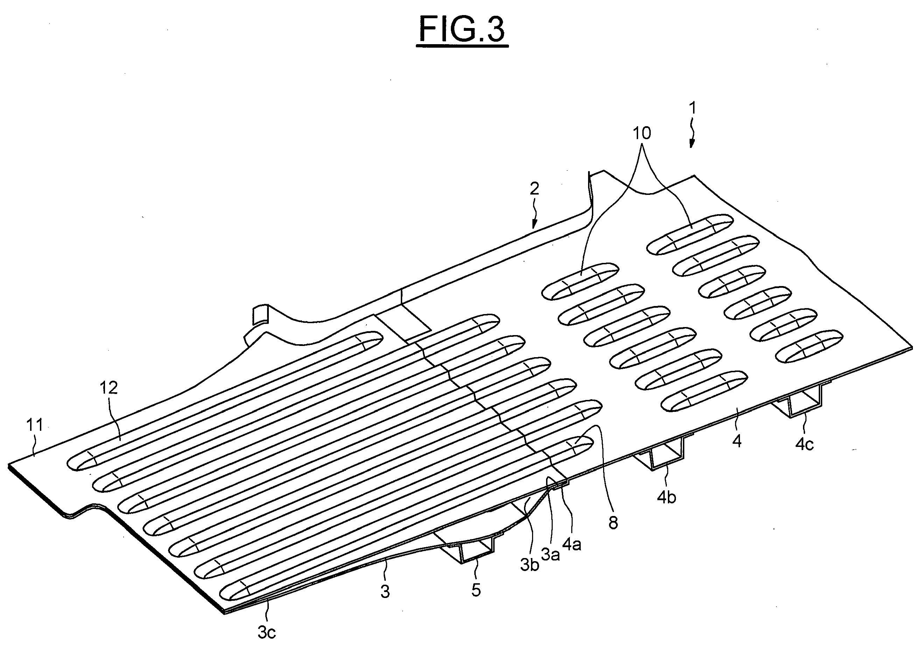

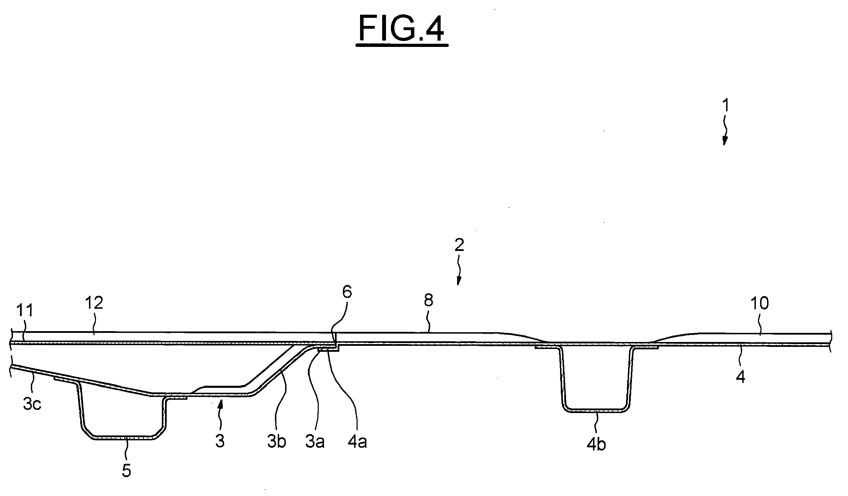

Tel qu'illustré sur les figures 3 et 4, le véhicule automobile 1 comprend un plancher supérieur 11 destiné à venir recouvrir la partie avant 3 du plancher arrière 2 afin d'obtenir une surface sensiblement plane facilitant le chargement dans l'espace de chargement du véhicule automobile 1.

Le plancher supérieur 11 présente une forme de plaque sensiblement plane s'étendant dans le plan XY dans le prolongement de la partie arrière 4 et comprend une pluralité de nervures longitudinales 12 destinées à coopérer avec les nervures 7 de la partie avant 3.

Ainsi, lorsque le plancher arrière 11 est positionné sur la portion plane 3a et l'extrémité de la deuxième portion inclinée 3c de la partie avant 3, les nervures 12 du plancher supérieur 11 se trouvent alignées avec les nervures 8 de la partie arrière 4 du plancher arrière 2.

Le plancher supérieur 11 est fixé à la partie avant 3 par des moyens de soudure, collage ou tout autre moyen de fixation adéquate.

Telles qu'illustrées, les nervures longitudinales 7, 8 et 12 sont régulièrement espacées.

Le plancher supérieur 11 est réalisé en tôle métallique emboutie ou en matière synthétique.

Grâce à l'invention qui vient d'être décrite, le risque de déformation au niveau de la jonction entre les parties avant et arrière du plancher arrière est réduit.

En effet, le nervurage continu entre les différentes parties du plancher arrière et du plancher supérieur permet d'augmenter la résistance à la torsion et à la flexion au niveau de la liaison entre les deux parties du plancher arrière et le plancher supérieur, laquelle liaison n'est pas située au droit d'un quelconque renforcement transversal.

De plus, un tel nervurage continu permet d'obtenir une surface sensiblement plane et donc un meilleur confort d'utilisation de l'espace de chargement du véhicule automobile.

## Revendications

1. Véhicule automobile comprenant un plancher arrière (2), un plancher avant relié au plancher arrière (2), ledit plancher arrière (2) comprenant une partie avant (3), une partie arrière (4) reliée à la partie avant (3) par des moyens de liaison (6), les parties avant (3) et arrière (4) comportant des moyens de renfort (4b, 5) s'étendant transversalement par rapport à l'axe longitudinal (X) du véhicule automobile, le plancher arrière (2) comprenant des moyens de rigidification (7, 8) situés entre les moyens de renfort (4b, 5), au niveau de la liaison entre les parties avant et arrière (3, 4), **caractérisé en ce que** les parties avant et arrière (3, 4) comprennent une pluralité de nervures longitudinales (7, 8) s'étendant suivant la direction longitudinale (X) du véhicule entre les moyens de renfort transversaux (4b, 5), les nervures (7) de la partie avant (3) étant situées dans le prolongement des nervures (8) de la partie arrière (4).

2. Véhicule automobile selon la revendication 1, comprenant un plancher supérieur (11) destiné à recouvrir la partie avant (3) du plancher arrière (2).

3. Véhicule automobile selon la revendication 2, dans lequel le plancher supérieur (11) comprend une pluralité de nervures longitudinales (12) s'étendant suivant la direction longitudinale (X) du véhicule et destinées à coopérer avec les nervures (7) de la partie avant (3) du plancher arrière (2).

4. Véhicule automobile selon la revendication 3, dans lequel les nervures (12) du plancher supérieur (11) sont alignées avec les nervures (8) de la partie arrière (4) du plancher arrière (2).

5. Véhicule automobile selon l'une des revendications 3 ou 4, dans lequel les nervures (12) du plancher supérieur (11) s'étendent sensiblement sur toute la longueur du plancher supérieur (11).

6. Véhicule automobile selon l'une des revendications 2 à 5, dans lequel les nervures longitudinales (7, 8, 12) sont régulièrement espacées.

7. Véhicule automobile selon l'une quelconque des revendications précédentes, dans lequel les parties avant et arrière (3, 4) sont réalisées en tôle métallique emboutie.

8. Véhicule automobile selon l'une quelconque des revendications 2 à 7, dans lequel le plancher supérieur (11) est réalisé en matière synthétique ou en tôle métallique emboutie.

## Patentansprüche

1. Kraftfahrzeug, das einen hinteren Boden (2) und einen mit dem hinteren Boden (2) verbundenen vorderen Boden umfasst, wobei der hintere Boden (2) einen vorderen Teil (3) und einen mit dem vorderen Teil (3) durch Verbindungsmittel (6) verbundenen hinteren Teil (4) aufweist, wobei der vordere Teil (3) und der hintere Teil (4) Verstärkungsmittel (4b, 5) aufweisen, die sich in Bezug auf die Längsachse (X) des Kraftfahrzeugs quer erstrecken, wobei der hintere Boden (2) Versteifungsmittel (7, 8) aufweist, die sich zwischen den Verstärkungsmitteln (4b, 5) auf Höhe der Verbindung zwischen dem vorderen und dem hinteren Teil (3, 4) befinden, **dadurch gekennzeichnet, dass** der vordere und der hintere Teil (3, 4) mehrere Längsstege (7, 8) aufweisen, die sich in der Längsrichtung (X) des Fahrzeugs zwischen den Querverstärkungsmitteln (4b, 5) erstrecken, wobei sich die Stege (7) des vorderen Teils (3) in der Verlängerung der Stege (8) des hinteren Teils (4) befinden.

2. Kraftfahrzeug nach Anspruch 1, das einen oberen Boden (11) umfasst, der dazu bestimmt ist, den vorderen Teil (3) des hinteren Bodens (2) abzudecken.

3. Kraftfahrzeug nach Anspruch 2, wobei der obere Boden (11) mehrere Längsstege (12) aufweist, die sich in der Längsrichtung (X) des Fahrzeugs erstrecken und dazu bestimmt sind, mit den Stegen (7) des vorderen Teils (3) des hinteren Bodens (2) zusammenzuwirken.

4. Kraftfahrzeug nach Anspruch 3, wobei die Stege (12) des oberen Bodens (11) auf die Stege (8) des hinteren Teils (4) des hinteren Bodens (2) ausgerichtet sind.

5. Kraftfahrzeug nach einem der Ansprüche 3 oder 4, wobei sich die Stege (12) des oberen Bodens (11) im Wesentlichen über die gesamte Länge des oberen Bodens (11) erstrecken.

6. Kraftfahrzeug nach einem der Ansprüche 2 bis 5, wobei die Längsstege (7, 8, 12) regelmäßig beabstandet sind.

7. Kraftfahrzeug nach einem der vorhergehenden Ansprüche, wobei der vordere und der hinteren Teil (3, 4) aus einem tiefgezogenen Metallblech verwirklicht sind.

8. Kraftfahrzeug nach einem der Ansprüche 2 bis 7, wobei der obere Boden (11) aus einem Kunststoff oder einem tiefgezogenen Metallblech verwirklicht ist.

## Claims

1. Motor vehicle comprising a rear floor (2) and a front floor connected to the rear floor (2), said rear floor (2) comprising a front part (3) and a rear part (4) connected to the front part (3) by a connection means (6), the front (3) and rear (4) parts comprising reinforcing means (4b, 5) extending transversely with respect to the longitudinal axis (X) of the motor vehicle, the rear floor (2) comprising stiffening means (7, 8) situated between the reinforcing means (4b, 5), at the connection between the front and rear parts (3, 4), **characterized in that** the front and rear parts (3, 4) comprise a plurality of longitudinal ribs (7, 8) extending in the longitudinal direction (X) of the vehicle between the transverse reinforcing means (4b, 5), the ribs (7) of the front part (3) being located in the continuation of the ribs (8) of the rear part (4).

2. Motor vehicle according to Claim 1, comprising an upper floor (11) intended to cover the front part (3) of the rear floor (2).

3. Motor vehicle according to Claim 2, in which the upper floor (11) comprises a plurality of longitudinal ribs (12) extending in the longitudinal direction (X) of the vehicle and intended to cooperate with the ribs (7) of the front part (3) of the rear floor (2).

4. Motor vehicle according to Claim 3, in which the ribs (12) of the upper floor (11) are aligned with the ribs (8) of the rear part (4) of the rear floor (2).

5. Motor vehicle according to either of Claims 3 and 4, in which the ribs (12) of the upper floor (11) extend substantially over the whole length of the upper floor (11).

6. Motor vehicle according to one of Claims 2 to 5, in which the longitudinal ribs (7, 8, 12) are uniformly spaced.

7. Motor vehicle according to any one of the preceding claims, in which the front and rear parts (3, 4) are made of stamped sheet metal.

8. Motor vehicle according to any one of Claims 2 to 7, in which the upper floor (11) is made of synthetic material or of stamped sheet metal.
